# EUROPÄISCHE PATENTSCHRIFT

(11) **EP 1 652 727 B1**
(45) Veröffentlichungstag und Bekanntmachung des Hinweises auf die Patenterteilung: **09.04.2008**
(21) Anmeldenummer: 05022734.7
(22) Anmeldetag: 19.10.2005
(51) Int. Cl.: B60Q 1/26, B60Q 1/52, B60R 1/12

(54) **Kraftfahrzeug mit einem Spurwechselassistenzsystem**
Motor vehicle with lane change assistance system
Véhicule automobile comprenant un système d'assistance au changement de voie

(30) Priorität: 29.10.2004 DE 102004052667
(43) Veröffentlichungstag der Anmeldung: 03.05.2006
(73) Patentinhaber: AUDI AG, 85045 Ingolstadt (DE)
(72) Erfinder: Popken, Markus, 85139 Wettstetten (DE)
(74) Vertreter: Thielmann, Frank

(56) Entgegenhaltungen:
- DE-A1- 19 737 653
- DE-U1-6202004 008 85
- US-A- 5 313 335
- US-A- 5 361 190
- US-B1- 6 290 378

## Beschreibung

Die Erfindung betrifft ein Kraftfahrzeug mit einem Spurwechselassistenzsystem umfassend ein Steuergerät und eine in einem Außenspiegel oder einem außenspiegelnahen Innenbereich im Kraftfahrzeug integrierte, über das Steuergerät ansteuerbare Leuchtanzeigeeinrichtung, über die dem Fahrer bei Erfassen einer für einen Spurwechsel gefährlichen Situation ein Leuchtsignal gebbar ist.

Solche Spurwechselassistenzsysteme, siehe z.B. US-A-5 313 335, dienen dazu, insbesondere den Fahrer zu warnen, wenn bei Erfassen einer Spurwechselabsicht ein tatsächlicher Spurwechsel beispielsweise auf der Autobahn nicht gefahrlos möglich ist, was dann der Fall ist, wenn die Nachbarspur belegt ist, sei es durch ein sich im toten Winkel des Außenspiegels befindliches Fahrzeug oder durch ein sich annäherndes, nicht mehr hinreichend weit beabstandetes Fahrzeug. Hierzu wird die Nachbarspur über ein Erfassungsmittel wie eine Kamera oder Sensormittel wie Ultraschall- oder Radarsensoren überwacht. Das Steuergerät ermittelt anhand der gegebenen Signale den Belegungszustand und gibt gegebenenfalls bei Erfassen einer Spurwechselabsicht, beispielsweise durch Betätigen des Blinkers, gegebenenfalls ein Signal zur Ansteuerung der Leuchtanzeigeeinrichtung aus, die dem Fahrer dann die Gefahr signalisiert. Die Leuchtanzeigeeinrichtung gibt dabei ein helles Blinksignal von sich, wobei auch andere Signalisierungsformen denkbar sind. Sie ist im fahrerseitigen Außenspiegel integriert, also an einer Stelle, die vom Fahrer ohnehin relativ häufig, nicht zuletzt auch vor einem Spurwechselvorgang beobachtet wird, zum anderen befindet sie sich an einer Position, die auch aus dem Augenwinkel heraus erfasst werden kann. Das gegebenen Blinksignal ist so ausgelegt, dass es "überschwellig" sein kann, das heißt, es ist so kontraststark, dass es die periphere Warn- bzw. Wahrnehmungsschwelle des Fahrers übersteigt und auch aus dem Augenwinkel heraus als auffälliges Signal wahrgenommen wird. Als Reaktion erfolgt in der Regel eine Blickzuwendung zum Außenspiegel, wo dann die potentielle Gefahrensituation unmittelbar vom Fahrer erkannt werden kann.

Problematisch hierbei ist, dass die periphere Wahrnehmungsschwelle steigt, je weiter außen die Leuchtanzeigeeinrichtung relativ zum Augpunkt des Fahrers, der in diesem Fall als die Nasenwurzel definiert werden kann, liegt. Das bedeutet, dass bei einer fest eingebauten und abstrahlenden Leuchtanzeigeeinrichtung wie beim erfindungsgemäßen Kraftfahrzeug die Wahrnehmbarkeit für weiter vorne sitzende, in der Regel kleinere Personen deutlich schlechter ist als für weiter hinten sitzende, größere Fahrer, da bei vorne sitzenden Personen die Leuchte unter einem wesentlich ungünstigeren Winkel zur allgemeinen, nach vorne gerichteten Blickrichtung ist als bei hinten sitzenden Personen. Das heißt, es ist für vorne sitzende Personen wesentlich schwieriger, die aufleuchtende Anzeige aus dem Augenwinkel heraus wahrzunehmen als für hinten sitzende Personen.

Der Erfindung liegt damit das Problem zugrunde, ein Kraftfahrzeug anzugeben, das unabhängig von der Sitzposition des Fahrers eines gute Erfassbarkeit der im Gefahrenfall aufleuchtenden Leuchtanzeigeeinrichtung ermöglicht.

Zur Lösung dieses Problems ist erfindungsgemäß vorgesehen, dass die unter einem sich zum Fahrer hin öffnenden, bezogen auf eine vorderst und hinterst und/oder unterst und oberst mögliche Sitzposition des Fahrers bestimmten Winkel abstrahlenden Leuchtanzeigeeinrichtung einen Lichtfächer emittiert, der in seiner Helligkeit von einer maximalen Helligkeit bezogen auf die vorderste Sitzposition und/oder die unterste Sitzposition des Fahrers zu einer minimalen Helligkeit bezogen auf die hinterste Sitzposition und/oder die oberste Sitzposition des Fahrer abnimmt.

Die erfindungsgemäße Leuchtanzeigeeinrichtung, die an der Fahrerseite und/oder auch der Beifahrerseite vorgesehen sein kann, emittiert zum einen gerichtet, das heißt, der abgestrahlte Leuchtfächer öffnet sich in einem Winkel, der so ausgelegt ist, dass er gerade die vorderste und hinterste mögliche Sitzposition des Fahrers erfasst, jedoch nicht mehr oder weniger diffus darüber hinaus abgestrahlt wird. Die Abstrahlung erfolgt also auf den Fahrer bzw. dessen zwischen den beiden Maximalpositionen mögliche Sitzpositionen hin optimal ausgerichtet, um wenig Störung zu verursachen und so wenig Licht wie möglich abzustrahlen.

Darüber hinaus variiert die Helligkeit innerhalb dieses Lichtfächers ebenfalls bezogen auf die maximalen Sitzpositionen. Dabei ist die Helligkeitsverteilung erfindungsgemäß derart ausgelegt, dass im Lichtfächerbereich, der zur vorderst möglichen Sitzposition gerichtet bzw. bezüglich dieser definiert ist, die maximale Helligkeit gegeben wird, die nach hinten, also zur anderen Fächergrenze hin bevorzugt kontinuierlich abnimmt. Das heißt, dem ungünstig weil relativ weit vorne sitzenden Fahrer wird ein bezogen auf seine Sitzposition optimiert ausgerichtetes und sehr helles Lichtsignal gegeben, während der weiter hinten sitzende Fahrer ein bezogen auf seine Sitzposition optimiert ausgerichtetes, jedoch weniger helles Lichtsignal erhält. Für den vorne sitzenden Fahrer erhöht sich damit die Möglichkeit der Erfassung des sehr hellen Lichtsignals aus dem Augenwinkel heraus, wenngleich er relativ ungünstig bezüglich der Leuchtquelle sitzt. Der weiter hinten sitzende, deutlich besser zur Leuchtquelle sitzende Fahrer erhält gleichermaßen ein von der Abstrahlrichtung her optimiertes, jedoch seiner Wahrnehmungsschwelle angepasstes Leuchtsignal, das etwas dunkler ist. Dieser Fahrer benötigt wie gesagt, nachdem er wesentlich günstiger zur Leuchtquelle sitzt, kein derart helles Signal, um aufmerksam zu werden. Es wird also erfindungsgemäß ein richtungsmäßig optimierter, in seiner Helligkeitsverteilung asymmetrischer Lichtfächer abgegeben, der in jeder Sitzposition eine gute Erfassung der aufleuchtenden Anzeige ermöglicht.

Neben oder zusätzlich zu der in horizontaler Richtung gegeben Anpassung bzw. Variation der Helligkeit bezogen auf die Sitzposition ist es auch möglich, diese Helligkeitsanpassung bzw. -variation auch in vertikaler Richtung vorzunehmen. Denn auch hier ergeben sich bezogen auf die jeweilige Sitzhöhe, die bei großen Fahrern in der Regel anders ist als bei kleinen Fahrern, oder die durch entsprechende Einstellung der Sitzhöhe variiert werden kann, unterschiedliche Anforderungen an die Helligkeit des gegebenen Signals für eine positionsabhängig stets gute Wahrnehmbarkeit. Ein großer Fahrer bzw. ein hoch sitzender Fahrer sitzt üblicherweise unter einem anderen vertikalen Winkel zur Leuchtquelle als ein kleiner oder niedrig sitzender Fahrer. Auch ist die Sicht durch die Windschutzscheibe in beiden Fällen unterschiedlich. Während ein großer oder hoch sitzender Fahrer relativ nahe zum Fahrzeugdach sitzt und folglich relativ wenig vom Himmel und mehr von der Straße und deren Umgebung sieht, sieht der kleinere oder niedrig sitzende Fahrer viel Himmel. Sein Gesichtsfeld ist folglich tagsüber wesentlich heller bzw. stärker ausgeleuchtet, insbesondere bei Sonnenschein, er bzw. seine Wahrnehmung ist folglich auf hell adaptiert. Auch der Umstand, dass der große Fahrer mehr von der monochromen Fahrbahn sieht als der kleine Fahrer, der verstärkt die lebendige, schnell vorbeiziehende Umgebung im Blickfeld hat, bewirkt, dass in beiden Fällen eine unterschiedliche Kontrastwahrnehmung gegeben ist. Würde nun bezogen auf die jeweilige Sitzposition stets ein gleich helles Leuchtsignal gegeben, so würden die Fahrer aufgrund der unterschiedlichen Adaption bzw. der unterschiedlichen Kontrastwahrnehmung die Signale als unterschiedlich hell wahrnehmen. Der kleinere bzw. niedrig sitzende Fahrer würde das Signal als weniger hell empfinden als der große oder erhöht sitzende Fahrer.

Wird nun, wie erfindungsgemäß vorgesehen, in vertikaler Richtung ein Helligkeitsgradient realisiert, so kann auf die unterschiedlichen Adaptions- bzw. Wahrnehmungsverhalten reagiert und für jede Sitzposition, die gleichbedeutend mit einer entsprechenden Augenposition ist, ein ausreichend helles, wahrnehmbares Leuchtsignal gegeben werden. Der große bzw. oben sitzende Fahrer erhält aufgrund der etwas dunkleren Augenadaption bzw. wahrgenommenen dunkleren Umgebung ein Leuchtsignal geringerer Leuchtdichte, also ein weniger helles Signal als der kleinere oder niedrig sitzende, hell adaptierte Fahrer. So kann auch in vertikaler Richtung ein richtungsmäßig optimierter, in seiner Helligkeitsverteilung asymmetrischer Lichtfächer abgegeben werden, der in jeder Sitz- bzw. Kopf- oder Augenposition eine gute Leuchtsignalerfassung ermöglicht.

Die Helligkeitsvariation kann auch überlagert sowohl in horizontaler als auch vertikaler Richtung vorgesehen sein, d.h. der sich horizontal und vertikal zwischen zwei Extrempositionen öffnende Lichtfächer variiert sowohl in horizontaler als auch vertikaler Richtung sitzpositionsabhängig in seiner Helligkeit.

Um den erfindungsgemäß scharf begrenzten Lichtfächer wie auch die Helligkeitsverteilung über den Lichtfächer zu realisieren, weist die wenigstens eine Lichtquelle aufweisende Leuchtanzeigeeinrichtung zweckmäßigerweise eine Optik auf, die der Lichtquelle vorgeschaltet ist, und die zur Fächerausbildung sowie zur Variierung der Helligkeitsverteilung im Lichtfächer dient.

Diese Optik kann nach einer ersten Erfindungsausgestaltung eine Fresnellinse und eine dieser vorgeschaltete Verteilungsoptik zum Aufweiten des Lichtfächers und zur Helligkeitsverteilung aufweisen. Über die Fresnellinse wird das von der Lichtquelle, beispielsweise einer LED, abgegebene Licht kollimiert, also parallel gerichtet und der Verteilungsoptik als gerichtetes Lichtbündel zugeführt. Die Verteilungsoptik ist derart ausgelegt, dass über sie das kollimierte Lichtbündel zum einen aufgeweitet wird, so dass sich der Lichtfächer in relativ scharfer randseitiger Abgrenzung ausbildet. Zum anderen erfolgt über die Verteilungsoptik auch die erfindungsgemäße Helligkeitsvariierung über die Fächerbreite bzw. -höhe. Die Verteilungsoptik stellt also sicher, dass jeder Augpunkt, der wie beschrieben zu Zwecken der Einfachheit und Einheitlichkeit als der Punkt der Nasenwurzel des Fahrers definiert ist, über die ganze Bewegungslänge des Sitzes und damit die Veränderbarkeit der Sitzposition bzw. die unterschiedlichen vertikalen Kopf- oder Augenpositionen die richtige Lichtmenge, die auf die periphere Wahrnehmungsschwelle des Fahrers in der jeweiligen Sitzposition hin optimiert ist, erhält.

Um die von der Lichtquelle, also beispielsweise der LED abgegebene Lichtmenge optimal nutzen zu können, stehen vorzugsweise die randseitigen Lichtsammelabschnitte der Fresnellinse näher zur Lichtquelle als die mittigen Sammelabschnitte. Die Fresnelline "wächst" also erfindungsgemäß mit den sägezahnartigen randseitigen Sammelabschnitten der LED entgegen, sie tendiert also zu einer Umschließung der Lichtemissionsfläche. Über die hiermit verbundene Totalreflexion innerhalb der Fresnellinse kann damit wesentlich mehr Licht eingesammelt werden.

Die Verteilungsoptik selbst kann mehrere parallel angeordnete Linsen umfassen, bei denen es sich bevorzugt um sehr kleine Mikrolinsen handelt. Sie ist also als Linsenarray ausgebildet. Die Linsen sind dabei so angeordnet, dass zum einen der Lichtfächer ausgebildet wird, zum anderen auch die Helligkeitsverteilung im erfindungsgemäßen Sinn hierüber eingestellt werden kann.

Alternativ zur Verwendung eines Linsenarrays ist es auch denkbar, dass die Verteilungsoptik eine über ihre Fläche ein unterschiedliches Transmissions- und richtungsmäßiges Abstrahlverhalten aufweisende Transmissionsscheibe umfasst. Über das unterschiedliche Transmissionsverhalten, das zwangsläufig zu einer unterschiedlich starken Lichtabsorption über die Scheibenfläche führt, wird die erfindungsgemäße Helligkeitsverteilung eingestellt. Das unterschiedliche Abstrahlverhalten bietet die Möglichkeit, den Lichtfächer aufzuweiten, das heißt, über die Scheibenfläche ist eine je nach der geforderten Ausrichtung bezüglich der Sitzposition unterschiedliche Abstrahlrichtung im jeweiligen Scheibenbereich realisiert.

Zur Reduzierung der Teilezahl ist es weiterhin zweckmäßig, wenn die Fresnellinse und die Verteilungsoptik, gleich wie diese nun ausgebildet ist, an einem gemeinsamen Bauteil vorgesehen sind. Beide können beispielsweise aus Kunststoff in einem entsprechenden Herstellungsverfahren gefertigt werden. Hierdurch kann die Anzahl der Einzelteile reduziert und Toleranzen besser eingehalten werden.

Alternativ zur Verwendung einer der Lichtquelle nachgeschalteten Linsenoptik ist es denkbar, der wenigstens eine Lichtquelle aufweisenden Leuchteinrichtung ein Mikrospiegelarray zuzuordnen, über das das emittierte Licht als Fächer reflektiert wird. In diesem Fall wird beispielsweise über die LED das Mikrospiegelarray, das hinsichtlich der Ausrichtung der einzelnen Mikrospiegel, die in der Regel auf einem ansteuerbaren Chip vorgesehen sind (auch als DLP-Chip benannt), entsprechend der gewünschten Fächerausbildung eingestellt ist, beleuchtet. Aufgrund der Mikrospiegelausrichtung bildet sich dann der erfindungsgemäß vorgesehene scharf begrenzte Lichtfächer aus. Die erfindungsgemäße Helligkeitsverteilung im Lichtfächer kann dabei über das Mikrospiegelarray selbst beeinflusst werden, das heißt, das Spiegelreflexionsvermögen variiert über die Arrayfläche, so dass im der vordersten Sitzposition zugewandten Arraybereich wesentlich mehr Licht reflektiert und damit eine höhere Lichtmenge abgegeben wird als im den hinteren Sitzpositionen zugeordneten Arraybereich.

Anstelle eines Mikrospiegelarrays kann auch ein entsprechend geformter, über die LED beleuchteter Hohlspiegel, der den scharfen Lichtfächer gemäß der definierten Fächerform reflektiert, verwendet werden. Durch eine entsprechend ausgeführte Beschichtung des vorzugsweise aus Kunststoff gefertigten Spiegelträgers kann das Reflexionsvermögen auch im Hinblick auf die gewünschte Helligkeitsverteilung eingestellt werden.

Alternativ ist es auch denkbar, dem Spiegel oder dem Mikrospiegelarray eine Verteilungsoptik zur Helligkeitsvariierung nachzuschalten, wobei auch diese entweder mehrere parallel angeordnete Linsen oder eine über ihre Fläche ein unterschiedliches Transmissionsverhalten aufweisende Transmissionsscheibe umfasst. Nachdem hier der Lichtfächer bereits über den Spiegel oder das Mikrospiegelarray definiert ist, muss über die Verteilungsoptik lediglich noch die Helligkeitsverteilung realisiert werden, nicht aber - anders als bei der vorher beschriebenen Ausführungsform - auch die Fächeraufweitung.

Weiterhin ist es zweckmäßig, wenn eine die Leuchtanzeigeeinrichtung nach außen hin abschließende Filterplatte mit einem Lichtabsorptionsvermögen von wenigstens 50 % vorgesehen ist. Über diese Filterplatte wird zum einen vermieden, dass von außen einfallendes Licht, das von den dahinter befindlichen Bauteilen zurückreflektiert werden kann, vom Fahrer versehentlich als Lichtsignal gewertet wird, nachdem über die über die Filterplatte realisierte Dämpfung nicht mehr ausreichend Reflexionslicht abgegeben wird. Darüber hinaus wird hierdurch ein deutlicher Kontrast erzeugt, das heißt, das eigentliche über die Leuchtanzeigeeinrichtung abgegebene Nutzlichtsignal, das unmittelbar auf die Filterplatte gegeben wird, ist, nachdem anderes Licht, das von außen einstrahlt und zurückreflektiert wird, sehr stark gedämpft wird, sehr deutlich erkennbar. Dem förderlich ist ferner, dass die Filterplatte eine dunkle, vorzugsweise schwarze Berandung aufweist, so dass hierüber ein sehr starker Kontrast zwischen dem über die Filterfläche aufleuchtenden Lichtsignal und der dunklen Berandung erzeugt wird.

Zweckmäßiger weist die Leuchtanzeigeeinrichtung mehrere, vorzugsweise vier Lichtquellen auf, denen jeweils eine Fresnellinse oder ein Spiegel oder Mikrospiegelarray zugeordnet ist, und denen gegebenenfalls eine gemeinsame Verteilungsoptik und Filterplatte zugeordnet ist. Es wird also ein Lichtquellenarray vorgeschlagen, dem entweder ein entsprechendes Fresnellinsenarray nebst gemeinsamer Verteilungsoptik, die alle bevorzugt an einem gemeinsamen Träger ausgebildet sind, zugeordnet ist, oder denen ein mehrere einzelne Spiegel oder Mikrospiegelarrays umfassendes Spiegelarray, ebenfalls an einem gemeinsamen Träger ausgebildet, zugeordnet ist. Dabei sollten die Leuchtanzeigeeinrichtungen den mehreren, vorzugsweise vier Lichtquellen in der Einbaustellung bevorzugt im Wesentlichen vertikal stehend angeordnet sein, so dass ein Lichtfächer mit hinreichender vertikaler Ausdehnung erzeugt werden kann.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Prinzipskizze eines erfindungsgemäßen Kraftfahrzeugs als Teilansicht,
- Fig. 2: eine Prinzipskizze zur Darstellung des erfindungsgemäßen Lichtfächeraufbaus und der Helligkeitsverteilung,
- Fig. 3: eine Prinzipskizze einer Leuchtanzeigeeinrichtung,
- Fig. 4: eine Prinzipdarstellung eines Ausschnitts eines Außenspiegels mit integrierter Leuchtanzeigeeinrichtung,
- Fig. 5: eine Prinzipskizze einer erfindungsgemäßen Leuchtanzeigeeinrichtung einer zweiten Ausführungsform, und
- Fig. 6: eine Prinzipskizze für die vertikale Helligkeitsvariation.

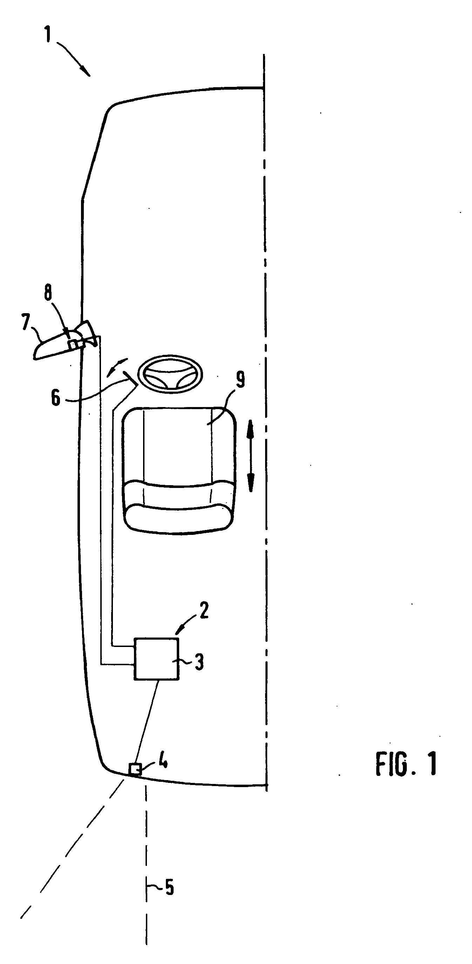

Fig. 1 zeigt ein erfindungsgemäßes Kraftfahrzeug 1 als Teilansicht, umfassend ein Spurwechselassistenzsystem 2 mit einem Steuergerät 3, das mit einer Überwachungs- oder Sensoreinrichtung 4, die hier am Fahrzeugheck dargestellt ist, kommuniziert. Über diese Überwachungs- oder Sensoreinrichtung 4 wird, wie durch den Abtastkegel 5 dargestellt ist, der Belegungszustand einer Nachbarspur kontinuierlich überwacht.

Wird dem Steuergerät 3 beispielsweise durch Betätigen des Blinkerhebels 6 ein Signal gegeben, das eine Spurwechselabsicht auf die benachbarte Fahrspur anzeigt, so überprüft das Steuergerät 3 anhand der von der Überwachungs- oder Sensoreinrichtung 4 gegebenen Signale, ob ein solcher Spurwechsel gefahrlos möglich ist oder nicht. Ist der Spurwechsel nicht möglich, steuert das Steuergerät 3 eine im fahrerseitigen Außenspiegel 7 integrierte Leuchtanzeigeeinrichtung 8 an, die ein optisches Signal an den Fahrer gibt, das ihm die Gefahrensituation signalisiert. Blickt der Fahrer im Moment der Signalgabe nicht auf den Außenspiegel 7, sondern beispielsweise geradeaus, so kann er dieses Signal trotzdem aus dem Augenwinkel wahrnehmen und seinen Blick dem Außenspiegel 7 zuwenden.

Wie in Fig. 1 dargestellt ist, kann der Fahrer durch seine Sitzposition des Fahrersitzes 9, der parallel zur Fahrzeuglängsachse bewegbar ist, wie durch den Doppelpfeil dargestellt ist, optimal zur Bedienung des Fahrzeugs einstellen. Hieraus ändert sich aber zwangsläufig seine Position bezüglich der Leuchtanzeigeeinrichtung 8, was mitunter zu Wahrnehmungsschwierigkeiten führen kann.

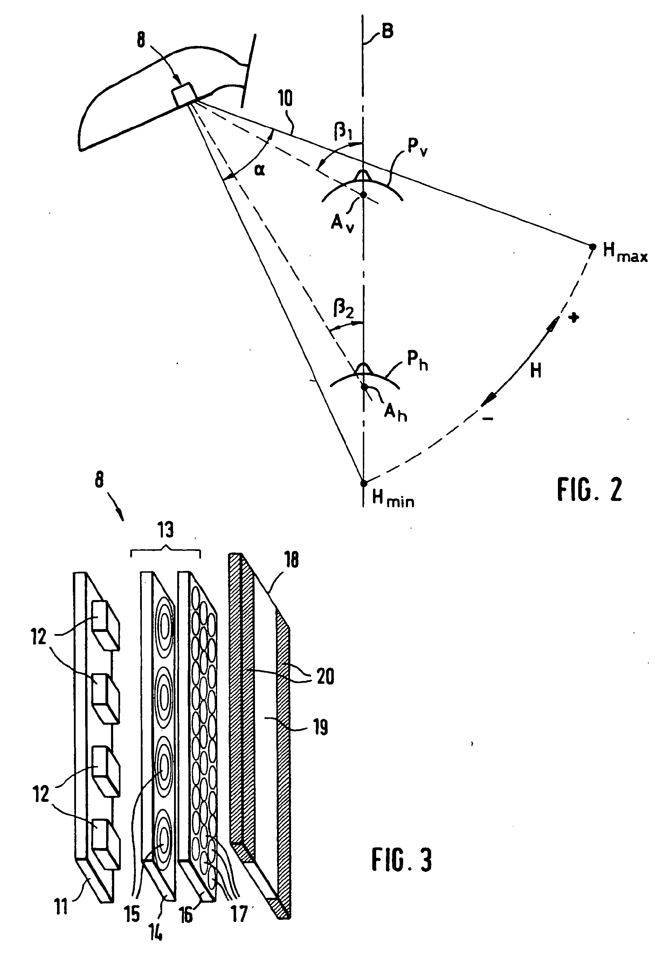

In Fig. 2 sind die beiden über die Sitzverstellung einnehmbaren maximalen Fahrerpositionen Pᵥ (vorderste Position) und Pₕ (hinterste Position) exemplarisch über den Fahrerkopf dargestellt. Gezeigt ist ferner der jeweilige zu Erläuterungszwecken verwendete Augpunkt Aᵥ und Aₕ zur vorderen und hinteren Position. Dieser Augpunkt ist aus Einfachheitsgründen als die Nasenwurzel des Fahrers definiert. Ersichtlich stehen die beiden Augpunkt Aᵥ und Aₕ in den jeweiligen Maximalpositionen unter sehr unterschiedlichen Winkeln zur Leuchtanzeigeeinrichtung 8. Der Winkel, den der Augpunkt Aᵥ einnimmt, ist in Fig. 2 mit dem Winkel β₁, dargestellt zwischen der gestrichelt dargestellten Verbindungslinie des Augpunkts Aᵥ zur Leuchteinrichtung 8 und der geradlinigen Blickrichtung B, angegeben. Dieser Winkel ist deutlich größer als der Winkel β₂, den der hintere Augpunkt Aₕ bezüglich der Leuchteinrichtung 8 einnimmt. Hieraus resultiert zwangsläufig, dass das Erkennen der aufleuchtenden Leuchteinrichtung 8 für den vorne sitzenden Fahrer ungleich schwieriger ist als für den hinten sitzenden Fahrer.

Um für ein optimales Erkennen zu sorgen ist die Leuchtanzeigeeinrichtung 8 derart ausgebildet, dass sie zum einen einen Lichtfächer 10 emittiert, der einen definierten Öffnungswinkel α aufweist, der bezüglich der maximalen Sitzpositionen definiert bzw. ausgerichtet ist. Ersichtlich ist der Öffnungswinkel α so bemessen, dass der emittierte Lichtfächer 10 gerade soweit aufgeht, dass der vordere Augpunkt Aᵥ bzw. die vordere Sitzposition Pᵥ sowie der hintere Augpunkt Aₕ bzw. die hintere Sitzposition Pₕ voll eingeschlossen sind, er ist jedoch zu den anschließenden Bereichen scharf abgegrenzt, das heißt, diese werden nicht mit ausgeleuchtet. Es erfolgt also eine richtungsselektive bzw. richtungsoptimierte Ausrichtung des Lichtfächers 10.

Innerhalb des Lichtfächers verändert sich die Helligkeit, wie durch die Pfeildarstellung, die den Helligkeitsverlauf H angibt, dargestellt ist. Ausgehend von einer maximalen Helligkeit zur vorderen Lichtfächergrenze hin nimmt die Helligkeit kontinuierlich zur hinteren Fächergrenze hin ab, was durch die maximalen und minimalen Helligkeitsparameter Hₘₐₓ bzw. Hₘᵢₙ sowie die Symbole "+" und "-" dargestellt ist. Das heißt, innerhalb des Lichtfächers ist die abgegebene Lichtmenge umso größer, je weiter vorne die über den Lichtfächer erfasste Position des Fahrers ist. Der vorne sitzende Fahrer bzw. Augpunkt Aᵥ erhält also ein sehr helles Lichtsignal, während der hinten sitzende Fahrer bzw. Augpunkt Aₕ ein deutlich schwächeres Lichtsignal erhält. Dem liegt die Überlegung zugrunde, dass für ein sicheres Überschreiten der Wahrnehmungsschwelle des Lichtsignals aus dem Augenwinkel heraus der vordere Fahrer ein deutlich helleres Lichtsignal aufgrund seiner ungünstigeren Sitzposition bezüglich der Leuchtanzeigeeinrichtung 8 benötigt als der hinten sitzende Fahrer. Benötigt ein Fahrer, der in der Position Pᵥ sitzt, dessen Augpunkt also der Position Aᵥ entspricht, einen Lichtpuls von beispielsweise 14000 cd/m², so benötigt ein in der Mitte zwischen den beiden Maximalpositionen Pᵥ und Pₕ sitzender Fahrer beispielsweise nur noch einen Lichtpuls von 10000 cd/m², weil er besser zur Leuchtanzeigeeinrichtung 8 positioniert ist, während der hinten sitzende Fahrer mit dem Augpunkt Aₕ nur noch ein Lichtpuls von ca. 8000 cd/m² benötigt, damit seine periphere Wahrnehmungsschwelle deutlich überschritten wird. Dieser Erkenntnis wird durch die erfindungsgemäß vorgesehene Helligkeitsveränderung über den Lichtfächeröffnungswinkel α Rechnung getragen.

Fig. 3 zeigt in Form einer Prinzipdarstellung den Aufbau einer erfindungsgemäßen Leuchtanzeigeeinrichtung 8. Diese weist im gezeigten Beispiel ein Modul 11 auf, das mehrere separate LED's 12 aufweist. Den LED's 12 ist eine Optik 13 vorgeschaltet, die zur Ausbildung des Lichtfächers sowie zur Variierung der Helligkeitsverteilung über den Lichtfächeröffnungswinkel dient. Diese Optik umfasst zum einen eine Kollimationsoptik 14 bestehend aus mehreren Fresnellinsen 15, wobei jeder LED 12 eine separate Fresnellinse 15 zugeordnet ist. Ferner ist eine Verteilungsoptik 16, die man auch als Streuoptik bezeichnen kann, vorgesehen, die aus einer Vielzahl einzelner Linsen 17, die ein Linsenarray bilden, besteht. Über die einzelnen Linsen erfolgt zum einen die Aufweitung des über die Kollimationsoptik 14 zugeführten parallelen Lichts zur Ausbildung des Lichtfächers, zum anderen erfolgt über sie auch die Variierung der Helligkeitsverteilung über den Lichtfächer, wozu die Linsen entsprechend ausgebildet bzw. angeordnet sind.

Zweckmäßig ist es, die Optik 13 als ein einstückiges Bauteil auszubilden, das heißt, die Fresnellinsen 15 sowie die Linsen 17 der Verteilungsoptik 16 sind an einem gemeinsamen Träger ausgebildet. Bevorzugt kommt hier ein Kunststoffbauteil zum Einsatz, an dem die einzelnen Linsen ausgebildet sind.

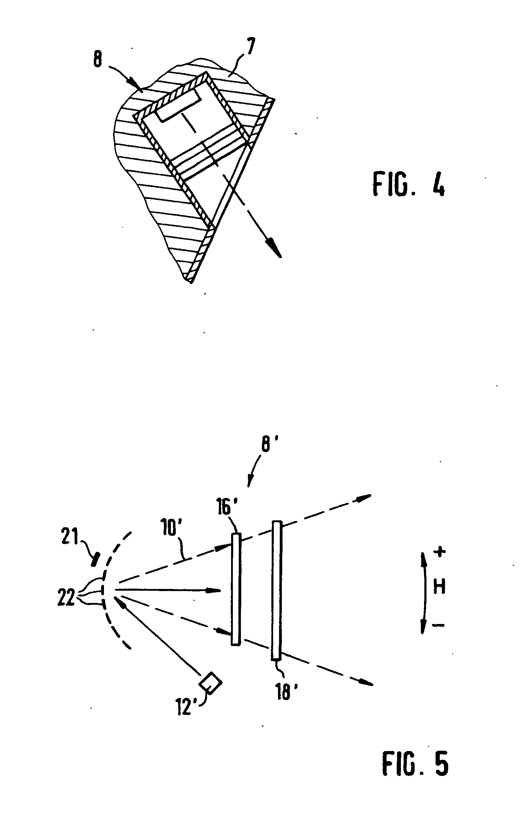

Die Leuchteinrichtung 8 wird schließlich über eine Filterplatte 18 nach außen hin abgeschlossen. Diese Filterplatte 18 weist einen mittleren Bereich 19 auf, der ein Transmissionsvermögen von maximal 50 % aufweist, das heißt, dass maximal die Hälfte des von der Optik 13 abgegebenen Lichts nach außen dringt. Beim Abschnitt 19 handelt es sich bevorzugt um einen Graufilter, so dass das äußere Erscheinungsbild beim Blicken auf die Leuchtanzeigeeinrichtung 8 dunkel ist. Zur Kontrastverstärkung ist der mittlere Abschnitt 19 randseitig von einer schwarzen Berandung 20 umgeben, die, siehe die in Fig. 4 gezeigte Einbausituation, grundsätzlich nicht beleuchtet wird, so dass sich bei einem Aufleuchten der Leuchtanzeigeeinrichtung 8 ein starker Kontrast zwischen dem dann hellen Abschnitt 19 und der schwarzen Berandung 20 ergibt.

Fig. 4 zeigt schließlich die Einbausituation der Leuchteinrichtung 8 in dem Außenspiegel 7. In diesem ist eine entsprechende Ausnehmung vorgesehen, in die die als gekapseltes Bauteil ausgeführte Leuchtanzeigeeinrichtung 8 eingesetzt ist. Die Anordnung ist dabei derart, dass das Modul 11 und damit die LED's 12 in der Einbaustellung vertikal angeordnet sind.

Fig. 5 zeigt schließlich als Prinzipskizze eine weitere Ausführungsform einer erfindungsgemäßen Leuchtanzeigeeinrichtung 8'. Auch hier kommt eine Lichtquelle beispielsweise in Form einer LED 12' zum Einsatz. Über diese wird im gezeigten Beispiel ein Mikrospiegelarray 21 beleuchtet, das eine Vielzahl einzelner kleiner Mikrospiegel 22 aufweist, die auf einem nicht näher gezeigten Chip angeordnet sind und in ihrer Position separat eingestellt und in dieser auch eingefroren werden können. Das von der LED 12' abgegebene Licht fällt auf die ausgerichteten Mikrospiegel 22, wo es reflektiert wird und sich der Lichtfächer 10' ausbildet. Dieser trifft im gezeigten Ausführungsbeispiel auf eine Verteilungsoptik 16', über die dann die bereits beschriebene Verteilung der Helligkeit über den Öffnungswinkel des Lichtfächers 10' erfolgt, wie durch den Doppelpfeil, an dem die Veränderung der Helligkeit H über die Symbole "+" und "-" dargestellt ist, gezeigt wird. Auch bei dieser Ausgestaltung ist der Einsatz von mehreren, beispielsweise vier LED's 12' an einem gemeinsamen Träger denkbar, wie bereits zur vorherstehenden Ausführungsform beschrieben, wobei hier jeder LED ein separates Mikrospiegelarray 21 zugeordnet wäre. Die Verteilungsoptik 16' kann ein gemeinsames Bauteil sein. Auch hierfür ist eine nach außen hin abschließende Filterplatte 18' vorgesehen. An Stelle der eingestellten Mikrospiegelarrays kann auch ein entsprechend der gewünschten Fächerform geformter Spiegel mit einer geeigneten Beschichtung verwendet werden.

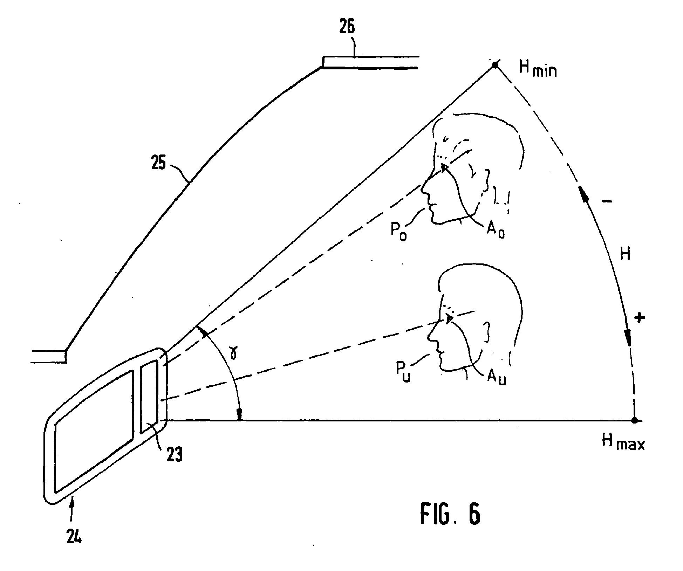

Fig. 6 zeigt eine Prinzipskizze zur Erläuterung der vertikalen Helligkeitsvariation in Abhängigkeit der Sitzposition. Gezeigt ist der stilisierte Kopf eines Fahrers in einer untersten Sitzposition Pᵤ und einer obersten Sitzposition Pₒ. Der Öffnungswinkel γ des Lichtfächers ist so ausgelegt, dass er diese Extrempositionen noch ausleuchtet. Ersichtlich liegen der unterste Augpunkt Aᵤ und der oberste Augpunkt Aₒ unter einem unterschiedlichen Winkel zur Leuchtanzeigeeinrichtung 23 im Seitenspiegel 24. Ersichtlich ist ferner, dass die jeweiligen in der untersten bzw. obersten Position sitzenden Fahrer verschieden relativ zu der gezeigten Windschutzscheibe 25 sitzen, also einen unterschiedlichen Blick durch diese haben. Der große oder erhöht in der obersten Sitzposition befindliche Fahrer sitzt relativ nah zum Fahrzeugdach 26, er wird von diesem abgedeckt. Folglich sieht er deutlich weniger Umgebungshimmel und mehr von der einfarbigen Straße und der Umgebung, als der unten sitzende Fahrer. Dieser sieht wesentlich mehr Himmel und weniger Straße. Folglich ist er tagsüber insbesondere bei Sonnenschein wesentlich heller ausgeleuchtet als der große Fahrer in der obersten Position, er ist in seiner Wahrnehmung auf "hell" adaptiert. Für eine gute Wahrnehmung des Leuchtsignals durch den großen bzw. in der obersten Sitzposition befindlichen Fahrer ist ein Leuchtsignal geringerer Leuchtdichte bzw. Helligkeit ausreichend, während dem kleinen, in der untersten Sitzposition befindlichen Fahrer ein wesentlich helleres Leuchtsignal für eine sichere Wahrnehmung gegeben werden muss, damit er dieses wegen der von ihm wahrgenommenen größeren Umgebungshelligkeit eindeutig erkennen kann. Zu diesem Zweck variiert nun die Helligkeit innerhalb des Lichtfächers vertikal, wie durch den Helligkeitsverlauf H dargestellt ist. Ausgehend von einer maximalen Helligkeit zur unteren Fächergrenze hin nimmt die Helligkeit zur oberen Fächergrenze hin ab, was durch die maximalen und minimalen Helligkeitsparameter Hₘₐₓ und Hₘᵢₙ angegeben ist. Das heiß, dass die abgegebene Lichtmenge umso größer ist, je niedriger der Fahrer sitzt bzw. je niedriger sein Kopf bzw. die Augen sind, so dass der kleine bzw. niedrig sitzende Fahrer bzw. sein Augpunkt ein sehr helles Leuchtsignal erhält, während der große, oben sitzende Fahrer bzw. sein Augpunkt ein deutlich schwächeres Leuchtsignal erhält.

Auch für die vertikale Helligkeitsvariation kann eine Leuchtanzeigeeinrichtung wie sie zuvor beschrieben wurde eingesetzt werden. Denkbar ist auch, sowohl eine horizontale als auch vertikale Helligkeitsanpassung vorzunehmen. In diesem Fall wäre die Leuchtanzeigeeinrichtung dahin auszulegen, die Helligkeit in beide Richtungen zu variierten.

Abschließend ist festzuhalten, dass die Leuchtanzeigeeinrichtung nicht zwingend im Außenspiegel an der Fahrerseite integriert sein muss. Sie kann auch im außenspiegelnahen Bereich im Inneren angeordnet sein, wo sie etwas günstiger zum Fahrer positioniert ist und sich darüber hinaus keine Verschmutzungsprobleme ergeben oder ein Beschlagen vorkommen kann. Sie kann auch - alternativ oder insbesondere zusätzlich - an der Beifahrerseite im dortigen Außenspiegel oder innen vorgesehen sein, wobei die Abstrahlung dieser Leuchtanzeigeeinrichtung mit einem entsprechend angepassten, auf den Fahrer gerichteten Lichtfächer erfolgt.

## Patentansprüche

1. Kraftfahrzeug mit einem Spurwechselassistenzsystem umfassend ein Steuergerät und eine in einem Außenspiegel oder einem außenspiegelnahen Innenbereich im Kraftfahrzeug integrierte, über das Steuergerät ansteuerbare Leuchtanzeigeeinrichtung, über die dem Fahrer bei Erfassen einer für einen Spurwechsel gefährlichen Situation ein Leuchtsignal gebbar ist,
**dadurch gekennzeichnet,**
**dass** die unter einem sich zum Fahrer hin öffnenden, bezogen auf eine vorderst und hinterst und/oder unterst und oberst mögliche Sitzposition (Pᵥ, Pₕ) des Fahrers bestimmten Winkel (α) abstrahlende Leuchtanzeigeeinrichtung (8, 8') einen Lichtfächer (10, 10') emittiert, der in seiner Helligkeit (H) von einer maximalen Helligkeit (Hₘₐₓ) bezogen auf die vorderste Sitzposition (Pᵥ) und/oder die unterste Sitzposition (Pᵤ) des Fahrers zu einer minimalen Helligkeit (Hₘᵢₙ) bezogen auf die hinterste Sitzposition (Pₕ) und/oder die oberste Sitzposition (Pₒ) des Fahrers abnimmt.

2. Kraftfahrzeug nach Anspruch 1,
**dadurch gekennzeichnet,**
**dass** die Leuchtanzeigeeinrichtung (8) wenigstens eine Lichtquelle aufweist, der eine Optik (13) zur Ausbildung des Lichtfächers (10) und zur Variierung der Helligkeitsverteilung (H) im Lichtfächer (10) vorgeschaltet ist.

3. Kraftfahrzeug nach Anspruch 2,
**dadurch gekennzeichnet,**
**dass** die Optik (13) eine Fresnellinse (15) und eine dieser vorgeschaltete Verteilungsoptik (16) zum Aufweiten des Lichtfächers (10) und zur Helligkeitsvariierung (H) aufweist.

4. Kraftfahrzeug nach Anspruch 3,
**dadurch gekennzeichnet,**
**dass** die randseitigen Lichtsammelabschnitte der Fresnellinse (15) näher zur Lichtquelle (12) stehen als die mittigen Lichtsammelabschnitte.

5. Kraftfahrzeug nach Anspruch 3 oder 4,
**dadurch gekennzeichnet,**
**dass** die Verteilungsoptik (16) mehrere parallel angeordnete Linsen (17) umfasst.

6. Kraftfahrzeug nach Anspruch 3 oder 4,
**dadurch gekennzeichnet,**
**dass** die Verteilungsoptik (16) eine über ihre Fläche ein unterschiedliches Transmissions- und Abstrahlverhalten aufweisende Transmissionsscheibe umfasst.

7. Kraftfahrzeug nach einem der Ansprüche 3 bis 6,
**dadurch gekennzeichnet,**
**dass** die Fresnellinse (15) und die Verteilungsoptik (16) an einem gemeinsamen Bauteil vorgesehen sind.

8. Kraftfahrzeug nach Anspruch 1,
**dadurch gekennzeichnet,**
**dass** die Leuchtanzeigeeinrichtung (8') wenigstens eine Lichtquelle (12') aufweist, der ein Spiegel oder ein Mikrospiegelarray (21) zugeordnet ist, über den oder das das emittierte Licht als Fächer (10') reflektiert wird.

9. Kraftfahrzeug nach Anspruch 8,
**dadurch gekennzeichnet,**
**dass** über den oder das Mikrospiegelarray (21) die Helligkeitsverteilung (H) im Lichtfächer (10') beeinflusst wird, oder dass eine dem Spiegel oder Mikrospiegelarray (21) nachgeschaltete Verteilungsoptik (16') zur Helligkeitsvariierung (H) vorgesehen ist.

10. Kraftfahrzeug nach Anspruch 9,
**dadurch gekennzeichnet,**
**dass** die Verteilungsoptik (16') mehrere parallel angeordnete Linsen umfasst.

11. Kraftfahrzeug nach Anspruch 9,
**dadurch gekennzeichnet,**
**dass** die Verteilungsoptik (16') eine über ihre Fläche ein unterschiedliches Transmissionsverhalten aufweisende Transmissionsscheibe umfasst.

12. Kraftfahrzeug nach einem der vorangehenden Ansprüche,
**dadurch gekennzeichnet,**
**dass** eine die Leuchtanzeigeeinrichtung (8) nach außen hin abschließende Filterplatte (18, 18') mit einem Lichtabsorptionsvermögen von wenigsten 50 % vorgesehen ist.

13. Kraftfahrzeug nach Anspruch 12,
**dadurch gekennzeichnet,**
**dass** die Filterplatte (18, 18') eine dunkle, vorzugsweise schwarze Berandung (20) aufweist.

14. Kraftfahrzeug nach einem der vorangehenden Ansprüche,
**dadurch gekennzeichnet,**
**dass** die Leuchtanzeigeeinrichtung (8, 8') mehrere, vorzugsweise vier Lichtquellen (12, 12') aufweist, denen jeweils eine Fresnellinse (15) oder ein Spiegel oder Mikrospiegelarray (21) zugeordnet ist, und denen gegebenenfalls eine gemeinsame Verteilungsoptik (16, 16') und Filterplatte (18) zugeordnet ist.

15. Kraftfahrzeug nach Anspruch 14,
**dadurch gekennzeichnet,**
**dass** die mehreren Fresnellinsen (15) oder die mehreren Spiegel oder Mikrospiegelarrays (21) an einem gemeinsamen Träger angeordnet sind.

16. Kraftfahrzeug nach einem der vorangehenden Ansprüche,
**dadurch gekennzeichnet,**
**dass** die Leuchtanzeigeeinrichtung (8, 8') mehrere, vorzugsweise vier Lichtquellen (12, 12') aufweist, die in der Einbaustellung der Leuchtanzeigeeinrichtung (8, 8') bevorzugt im Wesentlichen vertikal angeordnet sind.

17. Kraftfahrzeug nach einem der vorangehenden Ansprüche,
**dadurch gekennzeichnet,**
**dass** eine Lichtquelle eine LED (12,12') ist.

## Claims

1. Vehicle with a lane-change support system comprising a control device and a light alerting device, piloted by the control device, that is integrated into an outside mirror or into an internal area, within the given vehicle, that is close to the outside mirror, the said luminous alerting device being able to give the driver a light signal if it determines a situation that is dangerous when the given vehicle changes lane,
**characterized in that**
a light alerting device emits a light beam (10, 10') that, in its brightness, decreases from a maximum brightness (Bₘₐₓ) towards the front-most seat position (P_{f}) and the lowermost seat position (Pₗ) of the driver, to a minimum brightness (Bₘᵢₙ) at the rearmost seat position (Pᵣ) and/or the uppermost seat position (Pᵤ) of the driver.

2. Vehicle in accordance with claim 1,
**characterized in that**
the light indicating device (8) has at least one light source that is placed before an optical system (13) for producing the light beam (10) and for varying the distribution of brightness (B) in the light beam (10).

3. Vehicle in accordance with claim 2,
**characterized in that**
the optical system (13) has a Fresnel lens (15) and an optical distribution system (16) for extending the light beam (10) and for varying the brightness (B).

4. Vehicle in accordance with claim 3,
**characterized in that**
the rims-side light-gathering sections of the Fresnel lens (15) are closer to the light source (12) than the central light-gathering sections.

5. Vehicle in accordance with claim 3 or 4,
**characterized in that**
the optical distribution system (16) comprises several parallel lenses (17).

6. Vehicle in accordance with claim 3 or 4,
**characterized in that**
the optical distribution system (16) comprises a transmission plate having differing transmission and radiation behaviour.

7. Vehicle in accordance with one of claims 3 to 6,
**characterized in that**
the Fresnel lens (15) and the optical distribution system (16) are on a common structural piece.

8. Vehicle in accordance with claim 1,
**characterized in that**
the light indicator device (8') has at least one light source (12') that is associated with a mirror or a micro-mirror array (21) by means of which the emitted light is reflected as a beam (10').

9. Vehicle in accordance with claim 8,
**characterized in that**
the distribution of brightness (B) in the light beam (10') is affected by the micro-mirror array (21) or **in that** the optical distribution system (16') arranged after the mirror or micro-mirror array (21) is there to vary the brightness (B).

10. Vehicle in accordance with claim 9,
**characterized in that**
the optical distribution system (16') comprises several parallel lenses.

11. Vehicle in accordance with claim 9,
**characterized in that**
the optical distribution system (16') comprises a transmission plate showing transmission behaviour that differs over its surface.

12. Vehicle in accordance with one of the preceding claims,
**characterized in that**
there is a filter plate (18, 18'), able to absorb at least 50% of the light, that closes the light indicator device (8) towards the outside.

13. Vehicle in accordance with claim 12,
**characterized in that**
the filter plate (18, 18') has a dark, preferably black, border (20).

14. Vehicle in accordance with one of the preceding claims,
**characterized in that**
the light indicator device (8, 8') has several, preferably four light sources (12, 12') that each have a mirror or micro-mirror array (21) or Fresnel lens (15) associated with them and that, where applicable, have a common optical distribution system (16, 16') and filter plate (18) associated with them.

15. Vehicle in accordance with claim 14,
**characterized in that**
the several Fresnel lenses (15) or the several mirrors or micro-mirror arrays (21) are disposed on a common support.

16. Vehicle in accordance with one of the preceding claims,
**characterized in that**
the light indicator device (8, 8') has several, preferably four, light sources (12, 12') that are preferably disposed essentially vertically when in the assembled position of the light indicator device (8, 8').

17. Vehicle in accordance with one of the preceding claims,
**characterized in that**
one light source is an LED (12, 12').

## Revendications

1. Véhicule automobile doté d'un système d'assistance au changement de voie comprenant un appareil de commande et un dispositif d'affichage lumineux intégré dans un rétroviseur extérieur ou dans une zone intérieure près du rétroviseur extérieur dans le véhicule automobile, pouvant être commandé par le biais de l'appareil de commande, dispositif d'affichage par le biais duquel un signal lumineux peut être transmis au conducteur lors de la détection d'une situation dangereuse pour un changement de voie,
**caractérisé en ce**
**que** le dispositif d'affichage lumineux (8, 8') émettant dans un angle (α) s'ouvrant vers le conducteur, déterminé par rapport à une position assise (Pᵥ, Pₕ) du conducteur la plus en avant et la plus en arrière et/ou la plus basse et la plus haute possible émet un éventail lumineux (10, 10'), dont la luminosité (H) diminue depuis une luminosité (Hₘₐₓ) maximale par rapport à la position assise (Pᵥ) la plus en avant et/ou la position assise (Pᵤ) la plus basse du conducteur à une luminosité (Hₘᵢₙ) minimale par rapport à la position assise (Pₕ) la plus en arrière et/ou la position assise (Pₒ) la plus haute du conducteur.

2. Véhicule automobile selon la revendication 1,
**caractérisé en ce**
**que** le dispositif d'affichage lumineux (8) présente au moins une source de lumière, en amont de laquelle est monté un élément optique (13) servant à réaliser l'éventail lumineux (10) et à varier le réglage de la luminosité (H) dans l'éventail lumineux (10).

3. Véhicule automobile selon la revendication 2,
**caractérisé en ce**
**que** l'élément optique (13) présente une lentille de Fresnel (15) et un élément optique de répartition (16) monté en amont de celle-ci afin d'élargir l'éventail lumineux (10) et de varier la luminosité (H).

4. Véhicule automobile selon la revendication 3,
**caractérisé en ce**
**que** les sections collectrices de lumière côté bord de la lentille de Fresnel (15) sont plus près de la source de lumière (12) que les sections collectrices de lumière médianes.

5. Véhicule automobile selon la revendication 3 ou 4,
**caractérisé en ce**
**que** l'élément optique de répartition (16) comprend plusieurs lentilles (17) disposées en parallèle.

6. Véhicule automobile selon la revendication 3 ou 4,
**caractérisé en ce**
**que** l'élément optique de répartition (16) comprend un disque de transmission présentant sur sa surface un comportement de transmission et de rayonnement différent.

7. Véhicule automobile selon l'une quelconque des revendications 3 à 6,
**caractérisé en ce**
**que** la lentille de Fresnel (15) et l'élément optique de répartition (16) sont prévus sur un composant commun.

8. Véhicule automobile selon la revendication 1,
**caractérisé en ce**
**que** le dispositif d'affichage lumineux (8') présente au moins une source de lumière (12'), à laquelle est associée un réflecteur ou un ensemble de microréflecteurs (21), par le biais duquel la lumière émise est réfléchie sous la forme d'un éventail (10').

9. Véhicule automobile selon la revendication 8,
**caractérisé en ce**
**que** la répartition de la luminosité (H) dans l'éventail lumineux (10') est influencé par le biais du réflecteur ou de l'ensemble de microréflecteurs (21) ou en ce qu'un élément optique de réglage (16') monté en aval du réflecteur ou de l'ensemble de microréflecteurs (21) est prévu pour varier la luminosité (H).

10. Véhicule automobile selon la revendication 9,
**caractérisé en ce**
**que** l'élément optique de répartition (16') comprend plusieurs lentilles disposées en parallèle.

11. Véhicule automobile selon la revendication 9,
**caractérisé en ce**
**que** l'élément optique de répartition (16') comprend un disque de transmission présentant sur sa surface un comportement de transmission différent.

12. Véhicule automobile selon l'une quelconque des revendications précédentes,
**caractérisé en ce**
**qu'**une plaque de filtration (18, 18') terminant le dispositif d'affichage lumineux (8) vers l'extérieur, présentant une capacité d'absorption lumineuse d'au moins 50 % est prévue.

13. Véhicule automobile selon la revendication 12,
**caractérisé en ce**
**que** la plaque de filtration (18, 18') présente un bord (20) sombre, de préférence noir.

14. Véhicule automobile selon l'une quelconque des revendications précédentes,
**caractérisé en ce que**
le dispositif d'affichage lumineux (8, 8') présente plusieurs, de préférence quatre sources de lumière (12, 12'), auxquelles est associée respectivement une lentille de Fresnel (15) ou un réflecteur ou un ensemble de microréflecteurs (21), et auxquelles est associé éventuellement un élément optique de répartition commun (16, 16') et une plaque de filtration (18).

15. Véhicule automobile selon la revendication 14,
**caractérisé en ce que**
les plusieurs lentilles de Fresnel (15) ou les plusieurs réflecteurs ou ensembles de microréflecteurs (21) sont disposés sur un support commun.

16. Véhicule automobile selon l'une quelconque des revendications précédentes,
**caractérisé en ce**
**que** le dispositif d'affichage lumineux (8, 8') présente plusieurs, de préférence quatre sources de lumière (12, 12') qui sont disposées de préférence essentiellement verticalement dans la position de montage du dispositif d'affichage lumineux (8, 8').

17. Véhicule automobile selon l'une quelconque des revendications précédentes,
**caractérisé en ce**
**qu'**une source de lumière est une DEL (12, 12').
